Europäisches Patentamt

European Patent Office

Office européen des brevets

(19)

(11) Numéro de publication: **0 000 311**

**B1**

(12)

# FASCICULE DE BREVET EUROPEEN

(21) Numéro de dépôt: **78400040.8**

(22) Date de dépôt: **28.06.78**

(51) Int. Cl.³: **F 04 B 37/02, F 25 J 1/02**

(54) Cryopompe

(30) Priorité: **05.07.77 FR 7720554**

(43) Date de publication de la demande:
**10.01.79 Bulletin 79/01**

(45) Mention de la délivrance du brevet:
**23.07.80 Bulletin 80/15**

(84) Etats contractants désignés:
**DE FR GB NL**

(56) Documents cités:
**FR - A - 1 407 342**
**US - A - 3 296 773**

(73) Titulaire: **L'Air liquide, Societe Anonyme pour L'Etude et L'Exploitation des Procedes Georges Claude**
**75, Quai d'Orsay**
**F - 75321 Paris Cedex 07 (FR)**

(72) Inventeur: **Carle, Jacques**
**20, rue Saint Exupéry**
**F - 38400 Saint Martin D'Heres (FR)**

(74) Mandataire: **Bouton Neuvy, Liliane**
**L'Air liquide, Société Anonyme pour L'Etude et L'Exploitation des Procédés Georges Claude 75, Quai d'Orsay**
**F - 75321 Paris Cedex 7 (FR)**

Courier Press, Leamington Spa, England.

Cryopompe

La présente invention concerne une cryopompe du genre incorporant, dans une enceinte thermiquement isolée, des moyens de piégeage comportant des parois réfrigérées de piégeage par condensation et des parois de piégeage par adsorption recouvertes d'au moins une nappe de produits adsorbants, tel que charbon actif ou zéolithes. De telles parois de piégeage par adsorption sont décrites dans le brevet américain 3.296.773. Grâce à la combinaison de ces deux moyens de piégeage, on peut, au moins théoriquement, parvenir à descendre à des vides très poussés, de l'ordre de 10⁻ˣ torr, du fait que les gaz difficilement condensables même à de très basses températures de piégeage comme l'hydrogène, le néon sont piégés par les parois de piégeage par adsorption. Cependant l'efficacité des parois de piégeage par adsorption se trouve considérablement réduite par le fait qu'elles sont contaminées par les gaz plus facilement condensables comme l'azote, l'oxygène, l'argon. On est parvenu à atténuer cet inconvénient, en localisant les parois de piégeage par adsorption à l'aval des parois de piégeage par condensation par rapport au cheminement des gaz qui d'ailleurs comprennent avantageusement une paroi en forme de baffle protégeant du trajet direct des gaz les parois de piégeage par adsorption.

Ce type de baffle possède au moins trois inconvénients: d'une part il est onéreux à réaliser, d'autre part, pour être efficace en régime moléculaire, il doit être optiquement étanche, ce qui entraîne une forte diminution de la vitesse de pompage de la surface recouverte d'adsorbant; enfin quel que soit le modèle, il ne joue pratiquement aucun rôle pour la protection de l'adsorbant, lorsque le régime d'écoulement des gaz de l'enceinte est visqueux ou intermédiaire, ce qui peut arriver dans certains types d'utilisation de la cryopompe.

On a également proposé un autre procédé de pompage par adsorption consistant à déposer sur la cryosurface un gaz condensable à cette température et qui possède des propriétés adsorbantes pour les gaz incondensables, (par exemple un dépôt de $CO_2$ a des propriétés adsorbantes pour l'hydrogène à 20 K). D'une part, ce dépôt de gaz adsorbant est sujet aux mêmes inconvénients décrits ci-dessus qu'un adsorbant solide; d'autre part, lors de l'injection du gaz adsorbant sur la cryosurface, il se produit toujours une remontée de pression dans l'enceinte, soit par excès de gaz injecté, soit par réchauffement superficiel du cryodépôt déjà constitué et cette remontée de pression est généralement néfaste.

Un premier objectif de la présente invention est de réaliser une cryopompe à adsorption, ayant une grande efficacité de pompage, à savoir une vitesse de pompage maximum en régime moléculaire et une excellente protection de l'adsorbant en régime visqueux ou intermédiaire.

Un second objectif de la présente invention est de réaliser une cryopompe à injection de gaz adsorbant empêchant la remontée de pression dans l'enceinte lors de l'injection de gaz adsorbant.

Une cryopompe selon l'invention est caractérisée par un cloisonnage délimitant une zone confinée et comportant au moins une cloison déplaçable sous l'action d'un moyen de commande accessible de l'extérieur de ladite enceinte, depuis une position de fermeture isolant ladite zone confinée d'une partie restante d'enceinte jusqu'à une position de communication entre ladite zone confinée et ladite zone restante d'enceinte, les nappes de produit adsorbant étant situées dans ladite zone confinée dans ladite position de fermeture dudit cloisonnage.

De la sorte, on peut maintenir en l'état de complète régénération les parois de piégeage par adsorption pendant toutes les phases préliminaires à leur intervention finale pour capter les dernières quantités résiduelles de gaz très difficilement condensables. N'étant pas mis en présence des gaz plus facilement condensables qui sont piégés par les parois de condensation, l'efficacité des parois de piégeage par adsorption reste pleine et entière.

Les caractéristiques et avantages de l'invention ressortiront d'ailleurs de la description qui suit à titre d'exemple en référence aux dessins annexés dans lesquels:

— La figure 1 est une vue schématique partielle en perspective et en partie éclatée d'une cryopompe selon l'invention, dans la phase initiale de pompage,

— La figure 2 est une vue de la cryopompe selon la figure 1 dans la phase finale de pompage,

— Les figures 3 et 4 sont des vues analogues aux figures 1 et 2 d'une variante de réalisation,

— Les figures 5 et 6 sont des vues plus détaillées en élévation-coupe et de dessus du dispositif commande équipant une autre variante de réalisation de cryopompe.

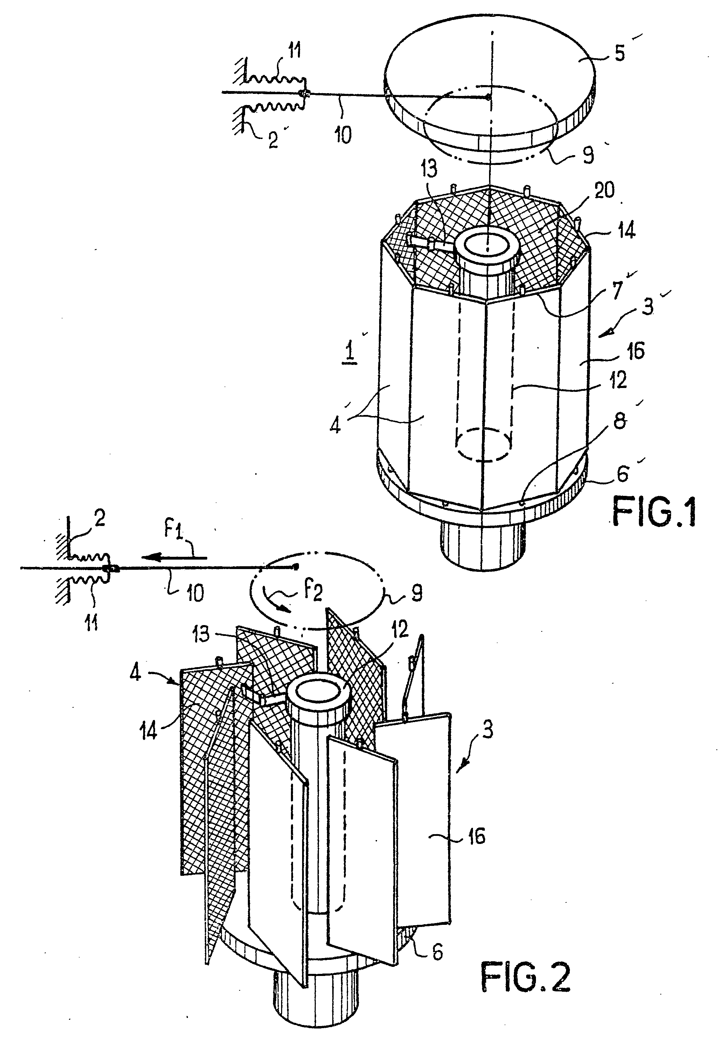

En se référant aux figures 1 et 2, dans une enceinte de pompage 1 dont on a représenté une partie de paroi 2 est placé un corps de cryopompe constitué d'un cloisonnage 3 formé d'une pluralité de cloisons longitudinales 4 (au nombre de huit) s'étendant selon un contour polygonal entre deux cloisons de fond 5 et 6. Les cloisons 4 sont montées le long d'un axe longitudinal défini par les tétons 7 et 8 s'engageant dans les tourillons des cloisons de fond 5 et 6. Sous la cloison de fond 5 est montée à rotation axiale une bague 9 qui peut être commandée en rotation par une timonerie 10 traversant la paroi d'enceinte 2 par une jonction étanche 11. Cette bague 9 est solidaire d'un pivot axial 12 qui est mécaniquement relié à chaque cloison 4 par une biellette articulée 13, en sorte que, partant de la position de fermeture complète telle que représentée à la figure 1, une traction sur la timonerie 10 selon la flèche f¹, qui a pour effet d'assurer un mouvement de rotation axiale selon la flèche f² de la bague 9 assure par l'intermédiaire des biellettes 13 une rotation d'ouverture faisant largement communiquer une zone confinée 20 délimitée par les cloisons 4, 5 et 6 en position fermée avec une partie restante de l'enceinte 1.

Les cloisons 4 présentent cette particularité d'être métalliques et de préférence en métal thermiquement conducteur. Elles sont revêtues sur une face seulement d'une nappe 14 de produit adsorbant généralement sous forme de particules de charbon actif ou de zéolithes collées sur la surface métallique ou incrustées dans le métal. Des moyens de réfrigération, par exemple des tubes soudés véhiculent de l'hélium à 20° K permettant le refroidissement des cloisons 4. Dans cette forme de réalisation, le face interne (figure 1) des cloisons 4 avec son revêtement in nappe 14 de produit adsorbant constitue la paroi de piégeage par adsorption, tandis que la face externe de ces mêmes cloisons 4, sans aucun revêtement, constitue la paroi de piégeage par condensation 16.

Le fonctionnement de la cryopompe est le suivant:

— Une chambre à évacuer (non représentée) et la cryopompe sont d'abord mises sous vide primaire (Pression inférieure à 5.10⁻¹ torr), au moyen d'une pompe mécanique, la cryosurface formée par le cloisonnage 3 étant en position ouverte (figure 2) pendant cette opération.

— La cryopompe est ensuite mise en froid, le cloisonnage 3 étant amené en position fermée (figure 1). La chambre se trouve alors évacuée par la cryopompe, les gaz condensables venant se fixer sur la face externe 16 des cloisons 4, dépourvues d'adsorbant. Le vide limite ainsi obtenu est identique au vide obtenu par une cryopompe simple et dépend du taux de gaz incondensables se trouvant dans la chambre à vider. On peut alors, soit pour abaisser le taux résiduel de gaz incondensables, soit parce que l'expérience qui se déroule dans la chambre libère des gaz incondensables, agir sur la timonerie 10, de manière à faire pivoter les cloisons 4 L'adsorbant, fixé en nappe 14 sur la face primitivement interne des cloisons 4, est alors mise en communication avec 1'enceinte 1 et devient le facteur essentiel de l'action de pompage. L'angle d'ouverture des cloisons 4 peut être réglé, rendant ainsi variable simultanément la vitesse de pompage pour le gaz à adsorber et le taux de contamination par les autres gaz.

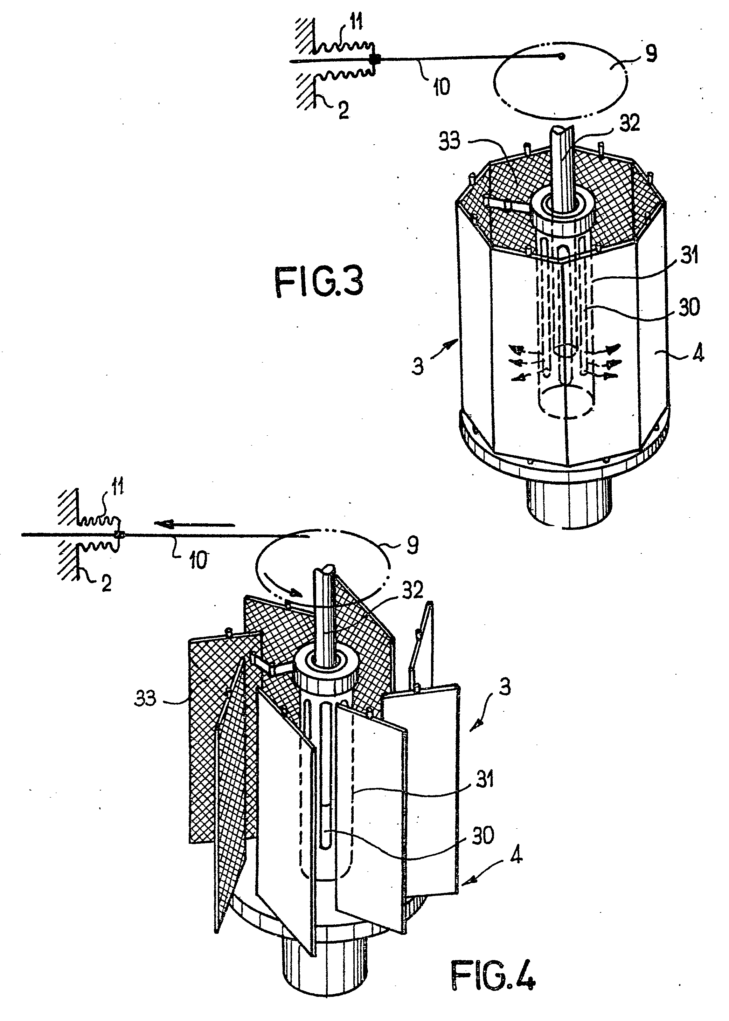

Selon la variante de réalisation représentée aux figures 3 et 4, on retrouve la même disposition géométrique du cloisonnage 3, mais ici les cloisons 4 sont dépourvues, sur leur face interne, de produit adsorbant fixé à demeure, et en regard de ces cloisons 4, lorsqu'elles sont en position fermée (figures 3) se présente l'une des lumières 30 ménagée à la périphérie d'un arbre creux 31 dont l'intérieur communique avec un conduit 32 raccordé à une source de gaz sous pression non représentée et située à l'extérieur de la cryopompe.

Le fonctionnement de cette variante de réalisation est le même que celui qui a été décrit précédemment avec cette différence que dans la phase finale où les parois de piégeage par adsorption vont intervenir, mais avant l'ouverture des cloisons 4, on délivre par les lumières 31 des bouffées de gaz adsorbant qui viennent immédiatement se condenser en nappe 33 sur la face interne des cloisons de piégeage par adsorption 4. Une fois le dépôt de gaz effectué, on peut alors manoeuvrer la timonerie 10 pour provoquer la rotation des parois 4 comme précédemment.

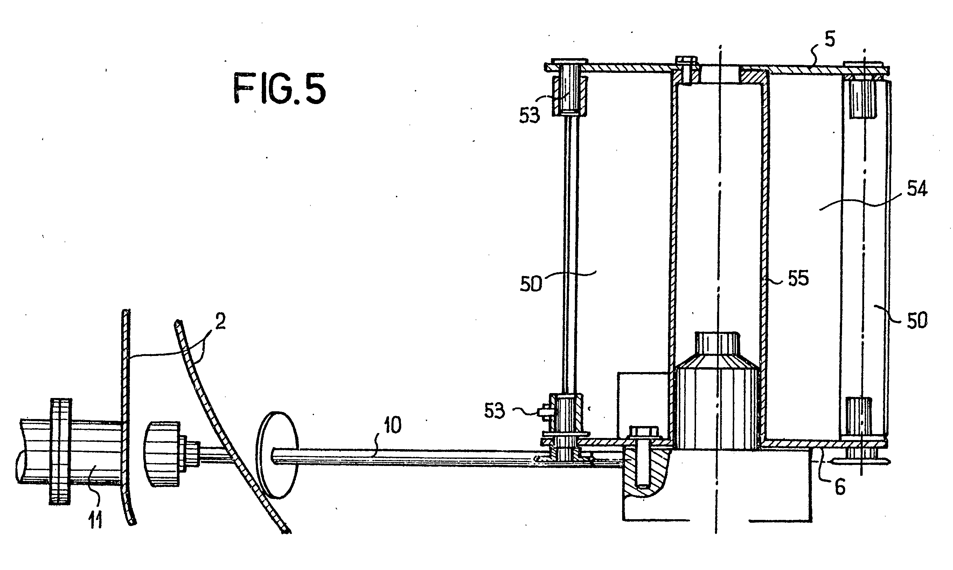

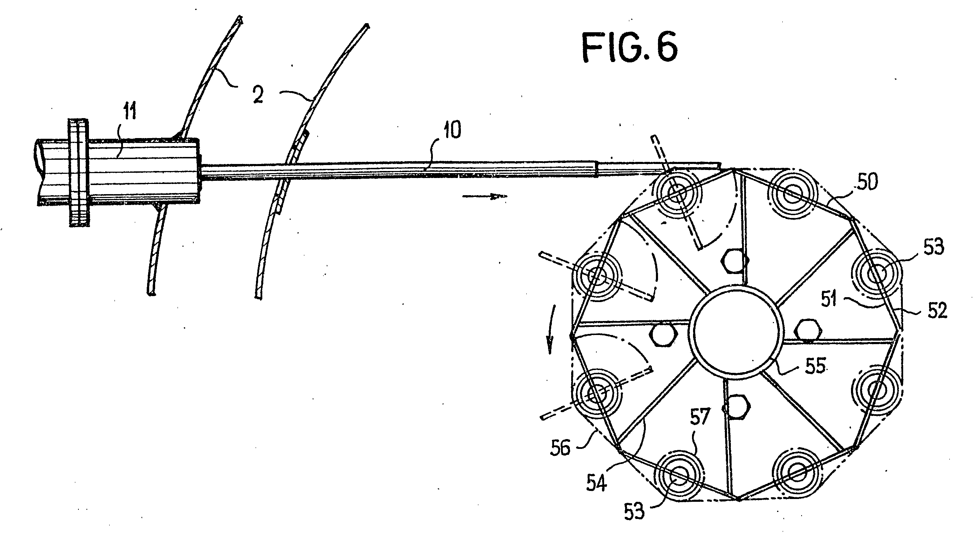

Selon la variante de réalisation représentée aux figures 5 et 6, on retrouve encore ici des cloisons 50 (au nombre de huit) disposées selon un contour polygonal, dont une face intérieure 51 est recouverte d'une nappe de produit adsorbant, tandis qu'une face extérieure 52 est dépourvue de tout revêtement. Comme précédemment, ces cloisons 50 sont montées à articulation sur des axes 53 et sont susceptibles d'être tournées d'un angle de 90° par la timonerie 10 traversant la jonction étanche 11 de la cloison 2 et par l'intermédiaire d'une chaîne 56 engrenant sur des pignons 57 solidaires des axes 53. Ici on a considérablement accru les surfaces de piégeage par adsorption en prévoyant un nombre égal de cloisons radiales fixes 54 s'étendant depuis un arbre central 55 jusqu'au voisinage immédiat des cloisons 50. Ces cloisons radiales 54 sont recouvertes sur leurs deux faces de nappes de produit adsorbant.

Les applications de la présente invention sont celles qui nécessitent un vide propre et poussé avec de grandes vitesses de pompage en particulier les applications engendrant un dégagement de grandes quantités de gaz incondensables, (tel que l'hydrogène: élaboration de couches minces, fusions nucléaires contrôlées, etc...

L'exemple d'application le plus connu est l'utilisation dans un bâti d'évaporation de couches mines, où les remises à l'air sont fréquentes, donc les périodes de fonctionnement en régime visqueux (5.10⁻¹ — 10⁻⁴ torr) nombreuses. L'invention permet de s'affranchir quasi totalement des inconvénients dûs à ces remises à l'air. La saturation de l'adsorbant (dans le cas d'adsorbant solide) n'est due alors qu'à la quantité de gaz incondensables dégagés lors des évaporations.

## Revendications

1. Cryopompe du genre incorporant, dans une enceinte thermiquement isolée (1—2) des moyens de piégeage réfrigérés (4) comportant des parois de piégeage par condensation (16) et des parois de piégeage par adsorption recouvertes d'au moins une nappe (14) de produit adsorbant, caractérisée par un cloisonnage (4—5—6) comportant au moins une cloison déplaçable (4) sous l'action d'un moyen de commande (9—10) accessible de l'extérieur de ladite enceinte (1—2) depuis une position de fermeture (FIG 1) isolant une zone confinée (20) d'une partie restante d'enceinte (1—2) jusqu'à une position de communication (FIG 2) entre ladite zone confinée (20) et ladite zone restante d'enceinte (1—2), les nappes (14) de produit adsorbant étant situées dans ladite zone confinée (20) dans ladite position de fermeture dudit cloisonnage (FIG 1).

2. Cryopompe selon la revendication 1, caractérisée en ce qu'au moins une partie des parois de piégeage par adsorption (4) comprend au moins en partie ledit cloisonnage (4—5—6) recouvert sur sa face, située du côté de la zone confinée (20), d'une nappe (14) de produit adsorbant.

3. Cryopompe selon la revendication 1, caractérisée en ce que la nappe (33) de produit adsorbant est constituée par du gaz adsorbant condensé et en ce que des moyens d'amenée dudit gaz (30—31—32) s'étendent de l'extérieur de l'enceinte de cryopompe jusqu'à l'intérieur de la zone confinée d'adsorption (20).

4. Cryopompe selon la revendication 1, caractérisée en ce que le cloisonnage est de forme générale cylindrique constitué d'une pluralité de cloisons longitudinales (4) disposées selon un contour polygonal entre deux cloisons de fond fixe (5—6), ladite cloison longitudinale (4) étant déplaçable autour d'un axe d'articulation longitudinal médian (7—8).

5. Cryopompe selon la revendication 1, caractérisée en ce le moyen de commande (9—10) d'une cloison déplaçable (4) est une timonerie (10) coulissante longitudinalement dans un passage étanche (11) de la paroi (2) d'enceinte de cryopompe (2—1).

6. Cryopompe selon la revendication 3, caractérisée en ce que les moyens d'amenée (30—31—32) du gaz adsorbant s'étendent de part en part de la zone confinée (20) et présentent des débouchés (31) répartis en regard des cloisons de piégeage (4) par adsorption de la zone confinée (20).

7. Cryopompe selon la revendication, caractérisée en ce que des parois de piégeage par adsorption comprennent des cloisons radiales fixes (54) à l'intérieur d'une zone confinée (20) de l'enceinte (1—2).

## Claims

1. A cryopump of the type incorporating refrigerated trapping means (4) in a thermally insulated chamber (1—2), said refrigerated trapping means (4) comprising walls (16) for trapping by condensation and walls for trapping by adsorption covered by at least one layer of an adsorbing product, characterised by a partitioning (4,5,6) comprising at least one partition (4) displaceable under the action of a control means (9,10) accessible from outside said chamber (1,2) from a closed position (Fig. 1) insulating a confined zone (20) of a remaining part of the chamber (1—2) to a position of communication (Fig. 2) between the said confined zone (20) and the said remaining zone of the chamber (1,2), the sheets (14) of adsorbent product being situated in said confined zone (20) in said position of closure of said partitioning (Fig. 1).

2. A cryopump according to claim 1, characterized in that at least a part of the walls for trapping by adsorption (4) comprises at least in part the said partitioning (4,5,6) covered by a layer (14) of adsorbent product on its face situated on the side of the confined zone (20).

3. A cryopump according to claim 1, characterized in that the layer (33) of adsorbent product is constituted by condensed adsorbent gas and in that means for conveying said gas (30—31—32) extend from outside the cryopump chamber to within the confined adsorbtion zone (20).

4. A cryopump according to claim 1, characterized in that the partitioning is of a general cylindrical shape constituted by a plurality of longitudinal partitions (4) disposed in a polygonal formation between two partitions with a fixed base (5,6), said longitudinal partitions (4) being displaceable round a median longitudinal axis of articulation (2,8).

5. A cryopump according to claim 1, characterized in that the means (9—10) for control of a displaceable partition (4) is a push-rod (10) slidable longitudinally in a sealed passage (11) of the wall (2) of the cryopump (2—1).

6. A cryopump according to claim 3, characterized in that the means for supply of the adsorbent gas extend from part to part of the confined zone (20) and present openings (31) distributed with respect to the trapping partitions (4) by adsorption of the confined zone (20).

7. A cryopump according to claim 4, characterized in that walls for trapping by adsorption comprise radial, fixed partitions (34) a confined zone (20) of the chamber (1—2).

## Patentansprüche

1. Pumpe für sehr tiefe Temperaturen bzw. Cryopumpe mit gekühlten Stellfalleneinrichtungen (4) in einem thermisch isolierten Behälter (1—2) mit Stellfallenwänden (16) für die Kondensation und mit Stellfallenwänden für die Adsorption, die mindestens mit einem adsorbierenden Mantel (14) belegt sind, dadurch gekennzeichnet, daß ein Wandaufbau oder Verschlag (4—5—6) mindestens eine unter der Tätigkeit einer Steuereinrichtung (9—10) bewegliche Trennwand (4) aufweist, wobei die Steuermittel von außberhalb dieses Behälters (1—2) zugänglich sind und die Trennwand (4) bzw. Trennwände von einer Schließstellung (Fig. 1) unter Isolierung einer begrenzten Zone (20) gegenüber einem verbleibendem Teil des Behälters (1—2) bis zu einer Verbindungsstellung (Fig. 2) zwischen der begrenzten Zone (20) und der verbleibenden Zone des Behälters (1—2) bewegbar ist bzw. sind, und daß die Mäntel (14) aus Adsorbiermittel in dieser begrenzten Zone (20) in der Schließstellung dieses Wandaufbaus (Fig. 1) angeordnet sind.

2. Pumpe nach Anspruch 1, dadurch gekennzeichnet, daß mindestens ein Teil der Stellfallenwände (4) für die Adsorption mindestens teilweise diesen Wandaufbau (4—5—6) aufweist, der auf seiner Oberfläche, die auf der Seite der begrenzten Zone (20) angeordnet ist, mit einem Mantel (14) aus adsorbierendem Stoff belegt ist.

3. Pumpe nach Anspruch 1, dadurch gekennzeichnet, daß der Mantel (33) aus adsorbierendem Stoff aus dem adsorbierenden, kondensierten Gas besteht und daß die Zuführeinrichtungen (30—31—32) für das Gas sich von außerhalb des Cryopumpenbehälters bis in das Innere der begrenzten Adsorptionszone (20) erstrecken.

4. Pumpe nach Anspruch 1, dadurch gekennzeichnet, daß der Wandaufbau die allgemeine Form eines Zylinders hat und aus einer Vielzahl von länglichen Trennwänden (4) besteht, die entlang einem polygonalen Linienzug zwischen zwei festen Bodentrennwänden (5—6) angeordnet sind, und daß die Längstrennwand (4) um einen in der Mitte angeordneten Längsgelenkbolzen (7—8) bewegbar ist.

5. Pumpe nach Anspruch 1, dadurch gekennzeichnet, daß die Steuereinrichtung (9—10) einer bewegbaren Trennwand (4) ein Gleitgestänge (10) ist, welches längs in einem dichten Durchgang (11) der Wand (2) des Cryopumpenbehälters (2—1) gleitend vorgesehen ist.

6. Pumpe nach Anspruch 3, dadurch gekennzeichnet, daß die Zuführeinrichtungen (30—31—32) des adsorbierenden Gases sich ganz durch die begrenzte Zone (20) erstrecken und Ausmündungen (31) darstellen, die gegenüber den Stellfallentrennwänden (4) für die Adsorption der begrenzten Zone (20) verteilt sind.

7. Pumpe nach Anspruch 4, dadurch gekennzeichnet, daß die Stellfallenwände für die Adsorption feste radiale Trennwände (54) im Innern der begrenzten Zone (20) des Behälters (1—2) aufweisen.

0 000 311

FIG.1

FIG.2

0 000 311

FIG.3

FIG.4

2

FIG.5

# FIG. 6

0 000 311